# EUROPEAN PATENT APPLICATION

(11) **EP 4 213 590 A1**
(43) Date of publication of application: **19.07.2023**
(21) Application number: 21866679.0
(22) Date of filing: 03.09.2021
(51) Int. Cl.: H05B 3/20, G02B 7/02, G03B 15/00, G03B 17/02, G03B 17/55, H04N 5/225

(54) **MANUFACTURING METHOD FOR HEATING FILM, HEATING FILM, LENS, AND IN-VEHICLE CAMERA**

(30) Priority: 14.09.2020 JP 2020153993
(71) Applicant: Panasonic Intellectual Property Management Co., Ltd., Osaka-shi, Osaka 540-6207 (JP)
(72) Inventor: UCHIYAMA, Hirokazu, Osaka-shi, Osaka 540-6207 (JP); YATSURI, Shigenori, Osaka-shi, Osaka 540-6207 (JP)
(74) Representative: Eisenführ Speiser
(86) International application number: PCT/JP2021/032499
(87) International publication number: WO 2022/054720

(57) **Abstract**

Provided are a heating film that can be manufactured via a simple manufacturing process and that excels in environmental resistance, a lens comprising the heating film, and an in-vehicle camera comprising the lens. The manufacturing method for a heating film for heating a lens comprises a supplying step for supplying a film raw material containing a carbon filler, a binder resin, and a solvent, in a heated state or a room temperature state according to a supply thickness of the film raw material.

## Description

### TECHNICAL FIELD

The present invention relates to a manufacturing method for a heating film, a heating film, a lens, and an in-vehicle camera.

### BACKGROUND ART

Patent Document 1 (for example, WO2019/225745) discloses a lens unit having a snow melting function provided by a heater part generating heat during energization. Patent Document 2 (for example, WO2019/181122) discloses an imaging apparatus comprising an aperture plate connected to a heat source between a lens and an imaging part to suppress the occurrence of dew condensation on the lens.

### PRIOR ART DOCUMENTS

### PATENT DOCUMENTS

Patent Document 1: WO2019/225745
Patent Document 2: WO2019/181122

### SUMMARY OF THE INVENTION

### PROBLEMS TO BE SOLVED BY THE INVENTION

An object of the present disclosure is to provide a heating film that can be manufactured via a simple manufacturing step and is excellent in environmental resistance, a lens including the heating film, and an in-vehicle camera including the lens.

### SOLUTIONS TO THE PROBLEMS

A manufacturing method according to the present disclosure is a manufacturing method for a heating film for heating a lens, the manufacturing method comprising a supplying step of supplying a film raw material containing a carbon filler, a binder resin, and a solvent in a heated state or a room temperature state according to a supply thickness of the film raw material.

A heating film according to the present disclosure is a heating film for heating a lens, the heating film comprising a carbon filler and a resin, wherein a sum of contents of the carbon filler and the resin is 90% or more based on an entire of the heating film.

### EFFECTS OF THE INVENTION

In the present disclosure, a heating film excellent in environmental resistance can be manufactured via a simple manufacturing step. More specifically, the heating film is manufactured via the supplying step of supplying the film raw material in a heated state or a room temperature state according to the supply thickness of the film raw material, whereby the sum of contents of the carbon filler and the resin contained in the heating film can be set to 90% or more.

### BRIEF DESCRIPTION OF THE DRAWINGS

Fig. 1A is a perspective view showing a state where a film raw material is supplied to a lens.
Fig. 1B is an enlarged cross-sectional view of a region b surrounded by a broken line in Fig. 1A.
Fig. 2A is cross-sectional process views schematically showing a conventionally known manufacturing method for a heating film.
Fig. 2B is cross-sectional process views schematically showing a conventionally known manufacturing method for a heating film.
Fig. 3 is a cross-sectional process view schematically showing a manufacturing method for a heating film according to a first embodiment of the present disclosure.
Fig. 4A is a perspective view schematically showing a heating film according to an embodiment of the present disclosure.
Fig. 4B is a cross-sectional view schematically showing a heating film according to an embodiment of the present disclosure.
Fig. 5 is a cross-sectional view of an in-vehicle camera including a lens according to an embodiment of the present disclosure.
Fig. 6 is a comparison view showing a comparison between the cross section of a film raw material containing a high-boiling solvent and the cross section of a film raw material containing a low-boiling solvent.
Fig. 7 is a perspective process view schematically showing a manufacturing method for a heating film according to a second embodiment of the present disclosure.
Fig. 8 is a perspective process view schematically showing a manufacturing method for a heating film according to a second embodiment of the present disclosure.
Fig. 9 is a perspective process view schematically showing a manufacturing method for a heating film according to a second embodiment of the present disclosure.
Fig. 10 is a perspective process view schematically showing a manufacturing method for a heating film according to a second embodiment of the present disclosure.
Fig. 11 is a perspective process view schematically showing a manufacturing method for a heating film according to a modification 1 of a second embodiment of the present disclosure.
Fig. 12 is a perspective process view schematically showing a manufacturing method for a heating film according to a modification 2 of a second embodiment of the present disclosure.
Fig. 13 is a perspective process view schematically showing a manufacturing method for a heating film according to a modification 3 of a second embodiment of the present disclosure.
Fig. 14 is a perspective view of a second embodiment of a heating film of the present disclosure.
Fig. 15A is a plan view of a second embodiment of a heating film of the present disclosure.
Fig. 15B is a cross-sectional view taken along line b-b in an arrow direction in Fig. 15A.
Fig. 16 is a perspective view of a third embodiment of a heating film of the present disclosure.
Fig. 17A is a plan view of a third embodiment of a heating film of the present disclosure.
Fig. 17B is a cross-sectional view taken along line b-b in an arrow direction in Fig. 17A.
Fig. 18 is a cross-sectional view of a modification of a third embodiment of a heating film of the present disclosure.
Fig. 19 is a plan view of a modification of a third embodiment of a heating film of the present disclosure.
Fig. 20 is a plan view of a modification of a third embodiment of a heating film of the present disclosure.
Fig. 21A is a plan view of a fourth embodiment of a heating film of the present disclosure.
Fig. 21B is a cross-sectional view taken along line b-b in an arrow direction in Fig. 21A.
Fig. 22A is a plan view of a modification of a fourth embodiment of a heating film of the present disclosure.
Fig. 22B is a cross-sectional view taken along line b-b in an arrow direction in Fig. 22A.
Fig. 23 is a perspective process view schematically showing a manufacturing method for manufacturing a heating film of each of a second embodiment and a third embodiment of the present disclosure.
Fig. 24 is a perspective process view schematically showing a manufacturing method for manufacturing a heating film of each of a second embodiment and a third embodiment of the present disclosure.
Fig. 25 is a perspective process view schematically showing a manufacturing method for manufacturing a heating film of each of a second embodiment and a third embodiment of the present disclosure.
Fig. 26 is a perspective process view schematically showing a manufacturing method for manufacturing a heating film of each of a second embodiment and a third embodiment of the present disclosure.

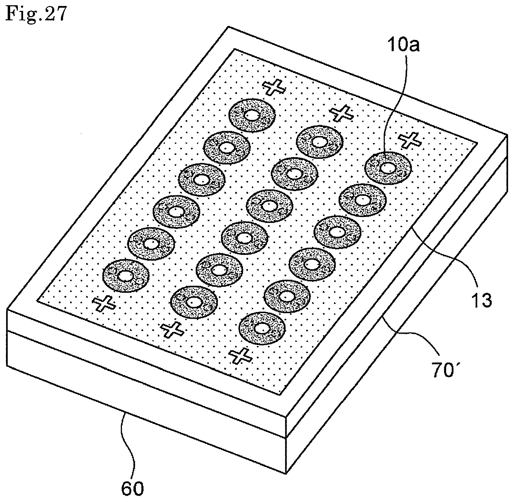

Fig. 27 is a perspective process view schematically showing a manufacturing method for manufacturing a heating film according to a fourth embodiment of the present disclosure.

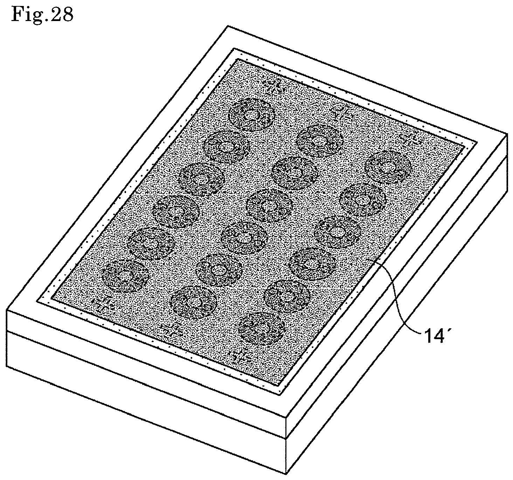

Fig. 28 is a perspective process view schematically showing a manufacturing method for manufacturing a heating film according to a fourth embodiment of the present disclosure.
Fig. 29 is a perspective process view schematically showing a manufacturing method for manufacturing a heating film according to a fourth embodiment of the present disclosure.
Fig. 30A is an SEM image of a heating film of Comparative Example.
Fig. 30B is an elemental analysis mapping image.
Fig. 30C is an elemental analysis table based on Fig. 30B.
Fig. 31A is an SEM image of a heating film of Example.
Fig. 31B is an elemental analysis mapping image.
Fig. 31C is an elemental analysis table based on Fig. 31B.
Fig. 32A is a graph showing the relationship between a resistance value and an elapsed time in an environment at a temperature of 85°C and a humidity of 85% with respect to a heating film of Comparative Example.
Fig. 32B is a graph showing the relationship between the change rate of the resistance value and the elapsed time shown in Fig. 32A.
Fig. 33A is a graph showing the relationship between a resistance value and an elapsed time in an environment at a temperature of 85°C and a humidity of 85% with respect to a heating film of Example.
Fig. 33B is a graph showing the relationship between the change rate of the resistance value and the elapsed time shown in Fig. 33A.

### EMBODIMENTS OF THE INVENTION

### [Findings as Basis of The Present Disclosure]

In recent years, a camera for a system for monitoring disaster prevention and crime prevention and the like, or a camera for an exterior application such as an in-vehicle camera has been known. In various environments, the camera for an exterior application is used, and for example, the use of the camera in an environment in which frozen products such as ice and frost adhere is considered. In a state where the frozen product adheres to a lens, light from a subject does not normally form an image on an imaging element, which is not preferable. Therefore, a technique in which a lens has a heater function is conventionally known. Such a lens having a heater function makes it possible to cause the heat generation of the heater to melt the frozen product attaching to the lens.

As such a lens having a heater function, a heater material in which a transparent conductive film such as ITO is formed in the form of a thin film on a resin substrate made of a PET film, polyimide, or a liquid crystal polymer or the like, or a heating sheet made of a conductive material containing carbon particles and a dielectric material as components on a resin substrate, and the like have been commercialized. However, development of a heater device using a coating type material that does not require expensive equipment such as vacuum film forming equipment or a precise pattern forming apparatus is desired.

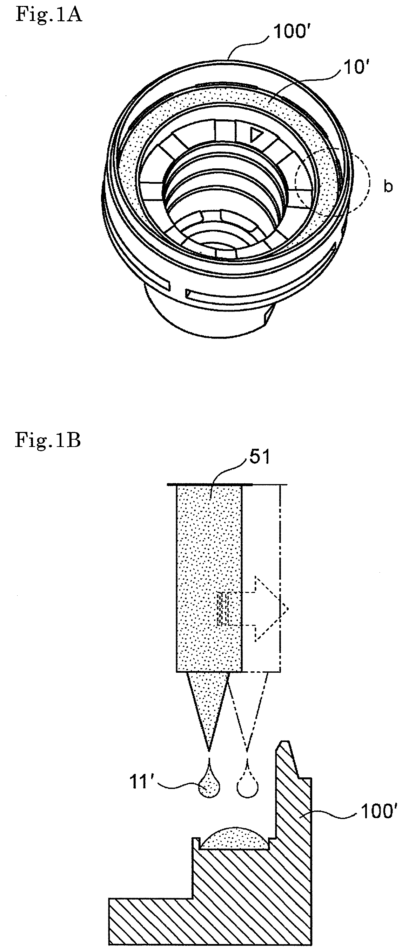

As the heater device using a coating type material, a lens including a heating film 10', obtained by applying a film raw material containing carbon particles and a solvent to a lens substrate 100' and baking the film raw material is conventionally known (Fig. 1A). Here, when the film raw material is applied to the lens substrate 100', for example, a dispenser 51 is disposed above the lens substrate 100' and the film raw material is applied using the dispenser 51 (Fig. 1B).

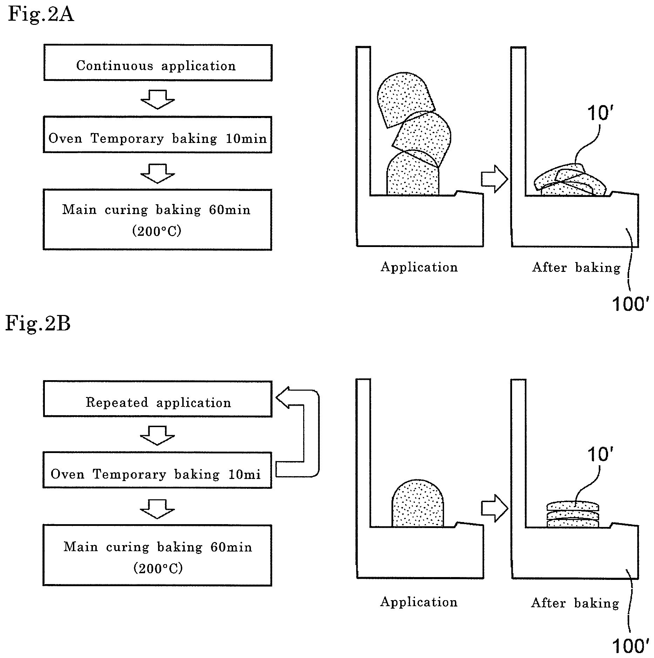

A manufacturing method for a heater device using a conventional coating type material will be described in more detail with reference to Fig. 2. Fig. 2A schematically shows the cross section of a heating film obtained by applying a film raw material 11' to a designed thickness using a dispenser 51, and then performing oven temporary baking (100°C) for 10 minutes and main curing baking (200°C) for 60 minutes. It is known that a film raw material of a heating film having a heater function shrinks to about 1/10 in volume by baking. In order to obtain a heating film having a thickness of about 400 pm, it was necessary to apply the film raw material 11' until the film raw material has a thickness of about 4 mm by the dispenser 51. When the film raw material 11' is applied so as to form a thick film as described above, as shown in Fig. 2A, a heating film 10' having a desired shape cannot be obtained, which causes a problem that the shape of the heating film 10' becomes unstable.

Therefore, as a manufacturing step for obtaining a heating film having a desired shape, for example, a manufacturing step schematically shown in Fig. 2B is considered. That is, one layer made of the film raw material 11' is applied by the dispenser 51, and then subjected to oven temporary baking (100°C) for 10 minutes. Thereafter, one layer made of the film raw material is applied again, and then subjected to oven temporary baking again in the same manner. This is repeated until a heating film precursor having a desired thickness is obtained, and then main curing baking (200°C) is performed for 60 minutes. According to this manufacturing method, the problem that the shape of the manufactured heating film 10' becomes unstable is solved, but the manufacturing step is complicated by repeating the application of the film raw material and the oven temporary baking. As will be described later, in the above manufacturing method, when a heating film is subjected to a quality test in an environment of a high temperature (85°C) and a high humidity (85%), the resistance value of the heating film greatly changes after the lapse of a long time, which caused impaired reliability.

The present inventor has tried to solve the above problems by addressing in a new direction instead of addressing on the extension of the conventional technique. As a result, the invention of a heating film achieving the above main object has been achieved.

Hereinafter, the heating film of the present disclosure will be described in more detail. However, unnecessarily detailed description may be omitted. For example, detailed description of already well-known matters or repeated description of substantially the same configuration may be omitted. This is to avoid unnecessary redundancy of the description and to facilitate understanding of those skilled in the art.

The applicant provides the accompanying drawings and the following description in order that those skilled in the art fully understand the present disclosure, and does not intend to limit the subject matter described in the claims. Note that various elements in the drawings are merely illustrated schematically and exemplarily for understanding the heating film of the present disclosure and the manufacturing method therefor, and appearance and dimensional ratios and the like may be different from actual ones.

### [Manufacturing Method for Heating Film of The Present Disclosure]

### -FIRST EMBODIMENT-

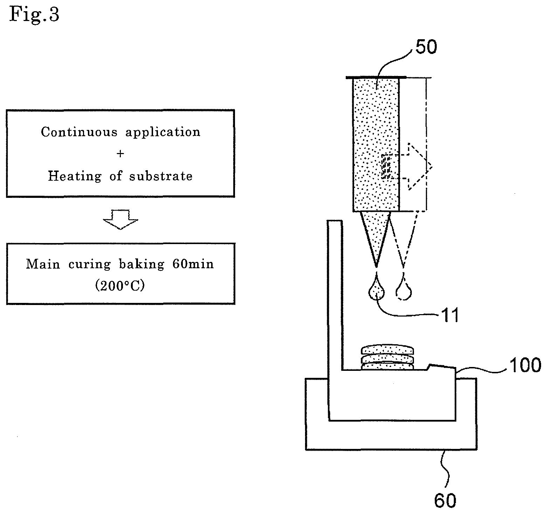

An embodiment of a manufacturing method for a heating film of the present disclosure will be described with reference to Fig. 3. Fig. 3 is a cross-sectional process view schematically showing a manufacturing method for a heating film according to a first embodiment of the present disclosure.

Before describing the manufacturing method for the heating film of the present disclosure, first, a film raw material 11 used for manufacturing the heating film will be described. The film raw material 11 contains a carbon filler, a binder resin, and a solvent.

The carbon filler has conductivity. The carbon filler may be granular, flaky, and fibrous, and may be at least one selected from the group consisting of carbon black, acetylene black, Ketjen black, furnace black, natural graphite, artificial graphite, kish graphite, amorphous carbon, hard carbon, soft carbon, activated carbon, carbon nanofibers, carbon nanotubes, and fullerene. The term "conductivity" in the present specification means that a surface electric resistance value is 10⁷ Ω or less.

The binder resin may contain a functional group contributing to a curing reaction. Specifically, from the viewpoint of the heat resistance or durability of the heating film, the binder resin preferably contains a fluororesin, and may more preferably contain a fluororubber compound. The binder resin contained in the film raw material may include materials in a state before the curing reaction.

The solvent is preferably a low-boiling solvent having a boiling point of 150°C or lower. At least one may be selected from the group consisting of hydrocarbon-based toluene (110.6°C) and xylene (136.2 to 144.4°C); ester-based ethyl acetate (77.1°C) and butyl acetate (126.0°C); alcohol-based isopropyl alcohol (82.5°C) and butanol (117.7°C); and ketone-based methyl ethyl ketone (79.6°C) and methyl isobutyl ketone (116.2°C), and other solvents may be contained as long as these solvents are contained. The term "boiling point" as used in the present specification refers to a boiling point at 1 atm.

The solvent is preferably a non-polar solvent. The term "non-polar solvent" as used in the present specification refers to a solvent having a relative permittivity value of 15 or less. For example, among the above-described low-boiling solvents, at least one may be selected from the group consisting of toluene (relative permittivity: 2.3), xylene (relative permittivity: 2.4), butyl acetate (relative permittivity: 5.0), and methyl isobutyl ketone (relative permittivity: 14.0), and other solvents may be contained as long as these solvents are contained. By using such a solvent, the carbon filler and the binder resin are uniformly dispersed.

The film raw material containing the carbon filler, the binder resin, and the solvent preferably has a viscosity of 10,000 cps or more and 50,000 cps or less. The term "viscosity" as used in the present specification refers to a viscosity at room temperature (20°C to 25°C). By setting the viscosity to 10,000 cps or more and 50,000 cps or less, the film raw material has a certain degree of viscosity, which suppresses unnecessary wet-spreading, whereby the film raw material is easily handled when an independent film shape having stable electrical characteristics is provided without being in contact with peripheral members. A BH type viscometer is used for measuring the viscosity, and as an example of the measurement conditions, a measurement value at 25°C/1 minute and 50 rpm may be used.

Next, a manufacturing method for a heating film will be described. The manufacturing method for a heating film of the present disclosure includes a supplying step of supplying a film raw material containing a carbon filler, a binder resin, and a solvent.

### <Supplying Step>

In the supplying step, the film raw material 11 may be supplied to a lens substrate 100. Specifically, it is preferable to supply the film raw material 11 so that the film raw material 11 has an outer circular contour in plan view, and has a pore at a center (that is, the film raw material 11 has a donut shape). A supply apparatus 50 supplying the film raw material may use a dispenser in order to accurately supply the film raw material onto the lens substrate, but is not limited to this example, and at least one may be selected from the group consisting of a spray coating apparatus, a slit coater apparatus, a die coater apparatus, a screen printing apparatus, an inkjet apparatus, or a pad printing apparatus. A plurality of apparatuses may be supplied in combination.

When the film raw material 11 is supplied to the lens substrate 100, the film raw material is supplied in a heated state or a room temperature state according to the supply thickness of the film raw material. Therefore, a heating element 60 for bringing the lens substrate 100 into a heated state or a room temperature state may be used. In the present embodiment, a thermal heater block may be used as the heating element 60, and the thermal heater block may have a structure to be fitted to the bottom surface of the lens substrate 100. The heating element 60 may employ any heating method as long as it can heat the film raw material. For example, at least one heating element may be selected from the group consisting of a method in which heating is performed by providing a coil heater in a thermal heater block, a method in which heating is performed by causing a heating medium to flow in a thermal heater block, and a method in which heating is performed by providing microwave and high frequency heating devices in a heater block. A heating temperature in the heated state while foaming generated in the surface of a coating film due to the volatilization of a solvent component is suppressed is preferably about 30 to 80°C. The room temperature state indicates about room temperature (20°C to 25°C). In the present embodiment, the description has been given of the apparatus bringing the heating element into contact with the lens substrate to heat the lens substrate, but the present invention is not limited to this example, and for example, a heating element for heating the lens substrate in a noncontact manner (for example, a blower such as a dryer) may be used.

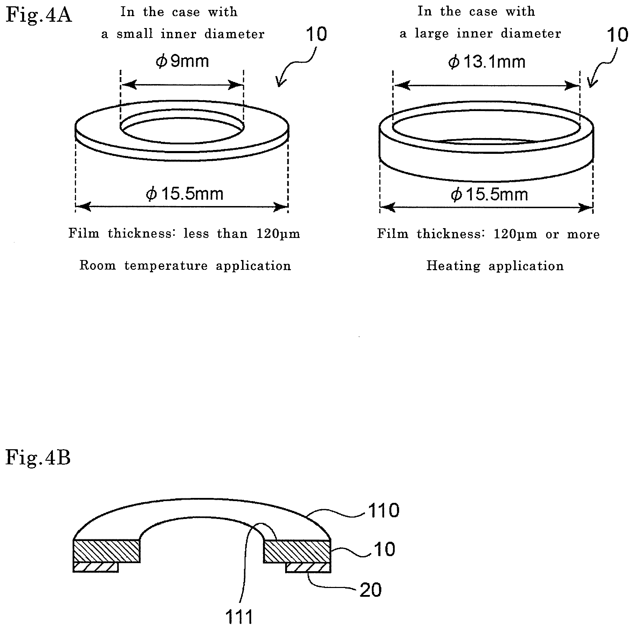

Here, in the supplying step of the present embodiment, when the supply thickness is less than 120 pm, it is preferable to perform the supplying step in a room temperature state, and when the supply thickness is 120 pm or more, it is preferable to perform the supplying step in a heated state. Here, the supply thickness means the thickness of the coating film material after drying. This supply thickness will be described in detail with reference to Fig. 4.

The shape of a heating film 10 to be manufactured varies depending on the plane area of a flat portion 111 (see Fig. 4 B) of the back surface of the lens. That is, when the plane area of the flat portion of the lens is large in plan view, the diameter of the pore at the center of the heating film 10 manufactured as shown in the left diagram of Fig. 4A may be reduced to reduce the film thickness of the heating film 10. Meanwhile, when the plane area of the flat portion of the lens is small in plan view, the diameter of the pore at the center of the heating film 10 manufactured as shown in the right diagram of Fig. 4A may be increased to increase the film thickness of the heating film 10. As an example, the left diagram of Fig. 4A illustrates the heating film 10 having an outer contour diameter of 15.5 mm, a center pore diameter of 9 mm, and a film thickness of less than 120 pm, and the right diagram of Fig. 4A illustrates the heating film 10 having an outer contour diameter of 15.5 mm, a center pore diameter of 13.1 mm, and a film thickness of 120 pm or more. Although the heating film of the left diagram in Fig. 4A and the heating film of the right diagram in Fig. 4A have different shapes from each other, the film thicknesses may be set so that the volumes thereof are substantially equal to each other. In this case, the resistance value per volume of the heater of the heating film is easily managed.

After performing the above-described supplying step, a baking step of baking the film raw material may be performed.

### <Baking Step>

The baking step may be performed by baking at a temperature of 180°C to 220°C for 60 minutes or more. This baking step causes a reaction in which the film raw material is cured to manufacture the heating film 10. Before the baking step, a temporary baking step of temporarily curing the film raw material may be performed.

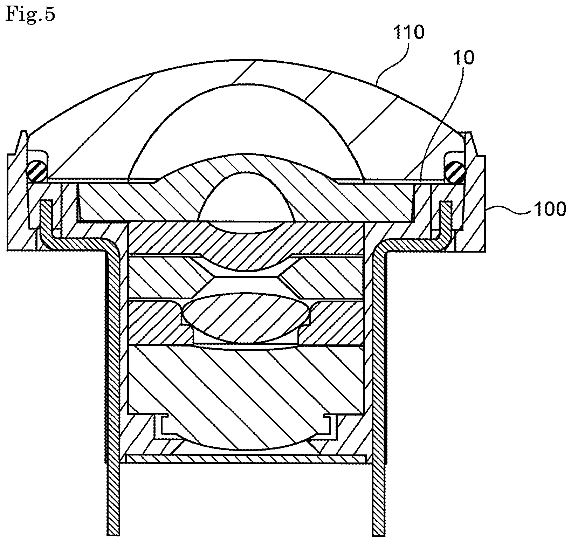

A heating film for heating the lens is manufactured via the above steps. An electrode 20 (see Fig. 4B) for applying electric power to the heating film 10 may be provided, and the electrode 20 is preferably provided on the back surface (surface opposite to the surface in contact with the lens) of the heating film 10 in order to facilitate wiring arrangement. The heating film 10 is disposed so as to be in direct contact with the lens 110 to cause the heating film 10 to generate heat, whereby the lens 110 can be heated. Furthermore, the heating film for heating the lens may be used in a camera for an exterior application, and may be provided in, for example, an in-vehicle camera (see Fig. 5).

The heating film manufactured via such a manufacturing step of the present disclosure has a stable shape as compared with the heating film manufactured via the conventional manufacturing step schematically shown in Fig. 2A. Furthermore, as compared with the conventional manufacturing step schematically shown in Fig. 2B, a heating film can be manufactured by a simple step. In the present embodiment, the aspect in which the film raw material is supplied to the lens substrate 100 has been described, but the present invention is not limited to this example, and for example, the film raw material may be directly supplied to the lens 110. The heating element in this case may have a structure to be fitted with the lens 110.

Since the heating film manufactured via the manufacturing step of the present disclosure can be directly formed on the lens substrate 100, the cost can be reduced by the minimum number of components without using a substrate or the like as a base. Since the electrode 20 is installed on the back surface (the surface opposite to the surface in contact with the lens) of the heating film 10, the electrode and a lead member can be easily connected to each other. When the plane area of the flat portion of the lens is small and a load per area is applied, the thickness of the heating film is set to 120 pm or more, and when the plane area of the flat portion of the lens is large and no load per area is applied, the thickness of the heating film is set to less than 120 pm, so that a heating film having good pressure resistance can be manufactured.

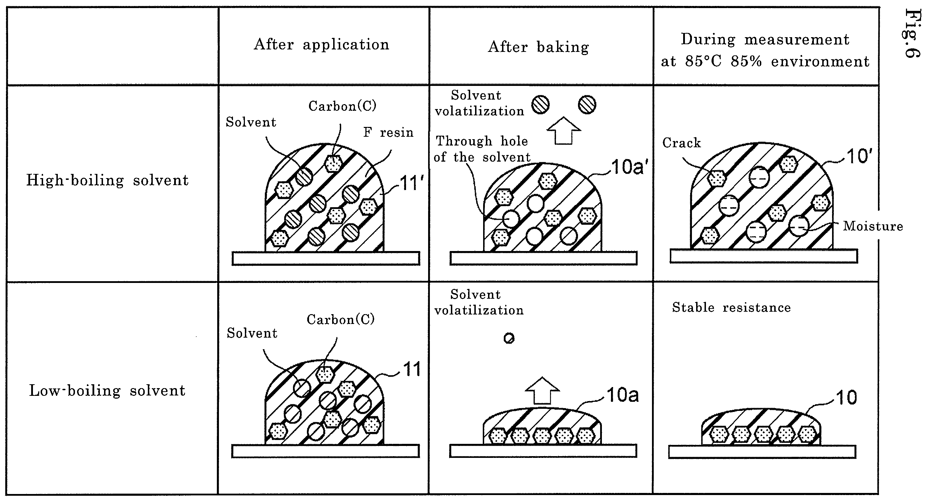

In the manufacturing step of the present disclosure, a low-boiling solvent is preferably used. The reason for this will be described with reference to Fig. 6. Fig. 6 is a comparison view showing a comparison between the cross section of a film raw material containing a high-boiling solvent and the cross section of a film raw material containing a low-boiling solvent.

The upper panel of Fig. 6 shows, for each step, the cross sections of a film raw material 1 1' in the case of using a high-boiling solvent, a heating film precursor 10a' after baking, and a heating film 10' at the time of resistance measurement in a high temperature (85°C) and high humidity (85%) environment. In the case of the high-boiling solvent, the solvent was hardly volatilized, and when the cross section of the heating film precursor 10a' after baking was observed, a through hole occurred in the volatile portion of the solvent. The present inventor has found that when the heating film 10' using the high-boiling solvent is tested in a high temperature (85°C) and high humidity (85%) environment, moisture or impurity caused by the surrounding high humidity environment enters a through hole portion, so that the resistance value of the heating film 10' becomes unstable.

Meanwhile, the lower panel of Fig. 6 shows, for each step, the cross sections of a film raw material 1 1' in the case of using a low-boiling solvent, a heating film precursor 10a' after baking, and a heating film 10' at the time of resistance measurement in a high temperature (85°C) and high humidity (85%) environment. In the case of the low-boiling solvent, the solvent is likely to be volatilized, so that the through hole of the solvent is reduced in the cross section of the heating film precursor 10a. Therefore, even when the heating film 10 using the low-boiling solvent is tested in a high temperature (85°C) and high humidity (85%) environment, the resistance value of the heating film can be stabilized.

### -SECOND EMBODIMENT-

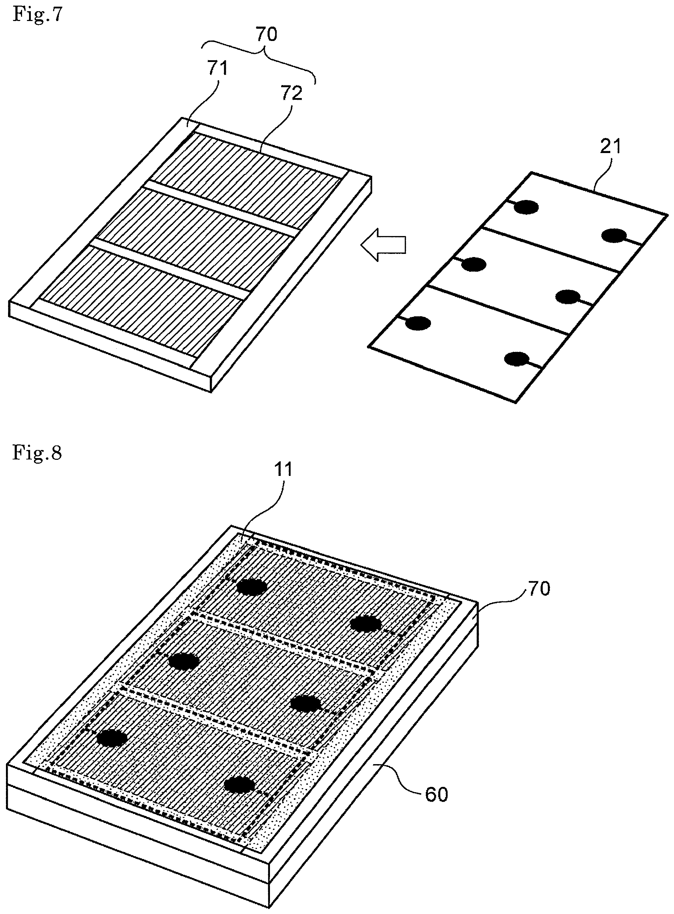

Next, an embodiment of a manufacturing method for a heating film of the present disclosure will be described with reference to Figs. 7 to 10. Figs. 7 to 10 are cross-sectional process views schematically showing a manufacturing method for a heating film according to a second embodiment of the present disclosure.

In the first embodiment described above, the manufacturing method for the heating film by supplying the film raw material to the lens substrate 100 or the lens 110 has been described, but in the present embodiment, a manufacturing method for the heating film itself will be described.

The manufacturing method for a heating film of the present embodiment may include a support member preparing step, a supplying step of supplying a film raw material, a baking step, a peeling step, and a cutting step.

### <Support Member Preparing Step>

A support member 70 may be used to support the film raw material (see Fig. 7). The support member 70 may include a frame 71 formed of a metal, and a resin member 72 fitting to the frame 71 and has good peelability from the film raw material. In the illustrated example (Fig. 7), three resin members 72 may be fitted to the frame 71. As the resin having good peelability from the film raw material, at least one may be selected from the group consisting of a fluororesin, a Teflon resin (Teflon: registered trademark), a silicone resin, and a polyethylene terephthalate resin film having a silicone resin disposed on the surface.

First, an electrode frame 21 may be placed on the support member 70 (see Fig. 7). In the illustrated example, an electrode frame 21 having electrodes for manufacturing three heating films may be placed on the support member 70. By such a method, a plurality of heating films 10 can be simultaneously manufactured. The material of the electrode frame 21 may be a conductive material such as a copper plate or a copper foil, and may be a stainless foil, a copper material with gold plating, or stainless steel with gold plating, or the like. The thickness of the electrode frame 21 may be 5 to 50 pm or less. The thickness may be more preferably 30 pm or less. In the electrode frame 21, particularly a corner portion of a contact surface with the frame 71 and the resin member 72 may have an R shape, and more preferably a circular shape. As a result, stress concentration is avoided to prevent unexpected cracks and the like in the film surface, whereby peeling is facilitated.

### <Supplying Step>

After the above-described support member preparing step, a film raw material may be supplied onto the support member 70 (see Fig. 8). At that time, a heating element 60 for bringing the support member 70 into a heated state or a room temperature state may be used. The heating element 60 can heat the film raw material 11 in contact with the support member 70. As described above, as the heating element 60, at least one may be selected from the group consisting of a method in which a coil heater is used, a method in which a heat medium is used, and a method in which microwave heating and high-frequency heating are used. A heating temperature in the heated state while foaming generated in the surface of a coating film due to the volatilization of a solvent component is suppressed is preferably about 30 to 80°C. In the supplying step of the present embodiment, the film raw material 11 may be supplied by a coater apparatus such as a die coater or a slit coater so as to cover at least the frame 71 and the resin member 72. The film raw material 11 may be supplied so as to cover the frame 71, the resin member 72, and the electrode frame 21. The film raw material 11 is supplied in this manner, whereby the frame 71 can simultaneously process a large number of products while preventing deformation such as warpage of the coating film material after a curing treatment, which can provide improved production efficiency. At this time, when the supply thickness of the film raw material is less than 120 pm, it is preferable to perform the supplying step in a room temperature state, and when the supply thickness is 120 pm or more, it is preferable to perform the supplying step in a heated state. Even when the supply thickness of the film raw material is less than 120 pm, the supply step may be performed in a heated state.

### <Baking Step>

After the film raw material is supplied to the support member 70, the baking step may be performed. The baking step may be performed by baking at a temperature of 180°C to 220°C for 60 minutes or more. The baking step may cause a reaction in which the film raw material is cured to manufacture a heating film precursor 10a. Before the baking step, a temporary baking step of temporarily curing the film raw material may be performed.

### <Peeling Step>

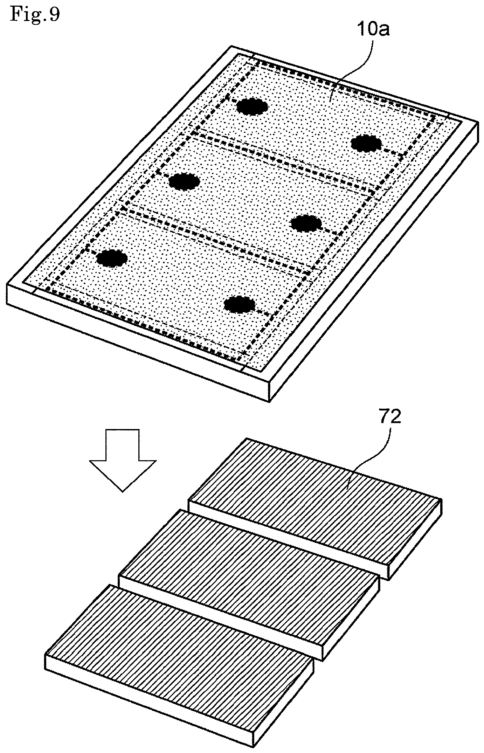

After the baking step is completed, the three resin members 72 may be peeled off from the back surface of the support member 70 (see Fig. 9). By peeling off the three resin members 72, the heating film precursor 10a obtained by the baking step may be exposed on the back surface of the support member 70. The structure of the support member 70 including the resin member 72 in which the three resin members 72 are integrated may be adopted.

### <Cutting Step>

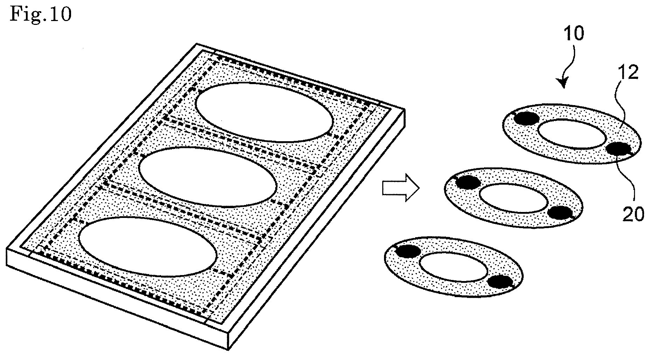

After the peeling step is completed, a cutting step of cutting the heating film precursor 10a in accordance with the lens shape may be performed (see Fig. 10). The cutting step may be performed without peeling off the resin member 72, and the resin member 72 may be peeled off after the cutting. Another material having the same shape as that of the resin member 72 may be inserted, followed by cutting. When the heating film precursor 10a is further cut, the heating film precursor 10a may be cut from the back side of the surface of the heating film precursor 10a in Fig. 9. In the cutting step, the heating film precursor 10a may be cut so that the heating film precursor 10a has an outer circular contour in plan view and has a pore at a center, and the heating film precursor may be cut so that the diameter of the pore increases as the thickness of the heating film precursor increases. Specifically, as described in the first embodiment (Fig. 4A), when the film thickness of the heating film precursor is less than 120 pm, cutting may be performed so that the diameter of the central pore decreases, and when the film thickness is 120 pm or more, cutting may be performed so that the diameter of the central pore increases. That is, by cutting so that the volumes of the two are substantially equal to each other, the resistance value per volume of the heater of the heating film is easily managed.

A heating film can be produced through the above steps. The heating film includes a heating part 12 generating heat over the entire closed region. By bringing the manufactured heating film into contact with the lens, the lens including the heating film can be manufactured. Furthermore, the heating film for heating the lens may be used in a camera for an exterior application, and may be provided in, for example, an in-vehicle camera.

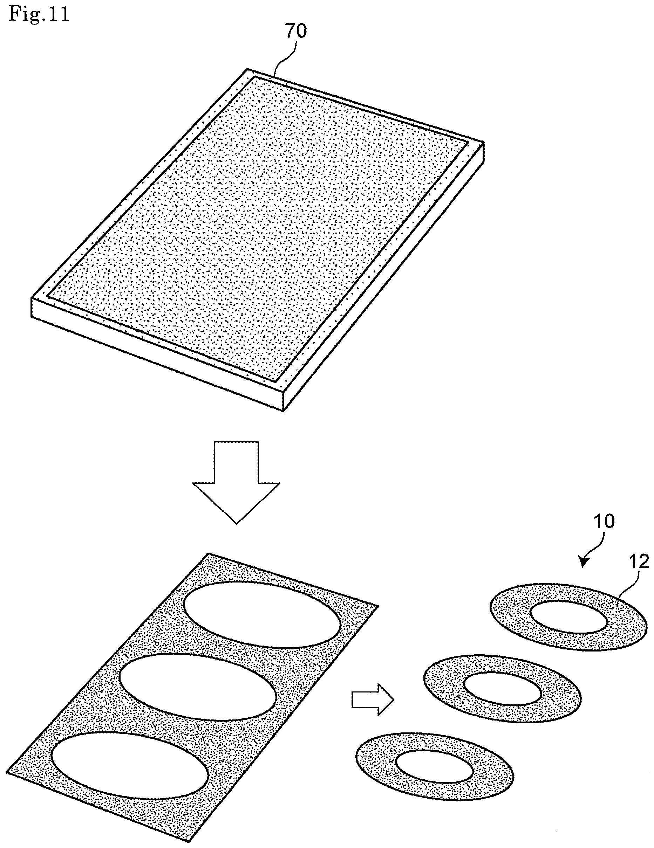

Next, modifications of the second embodiment will be described with reference to Figs. 11 to 13. Figs. 11 to 13 are cross-sectional process views schematically showing a manufacturing method for a heating film according to modifications 1 to 3 of the second embodiment of the present disclosure.

### -Modification 1-

In the support member preparing step in the above-described second embodiment, the embodiment has been described, in which the support member 70 including the frame 71 formed of a metal and the resin member 72 having good peelability from the film raw material is used. However, instead of this configuration, the entire support member 70 may be made of a resin having good peelability from the film raw material (see Fig. 11). According to such a configuration, the peeling step can be completed in the form of a continuous coating film by peeling off the support member 70 from the film raw material, whereby efficient experiment manufacturing of a product is provided as compared with the case of peeling off the three resin members described in the second embodiment described above to provide an easy manufacturing step. For example, it is possible to take out the product with a small product pitch. In the present modification, the entire closed region of the heating part 12 is a conductive resistor, whereby the formation of the electrode 20 may be omitted.

### -Modification 2-

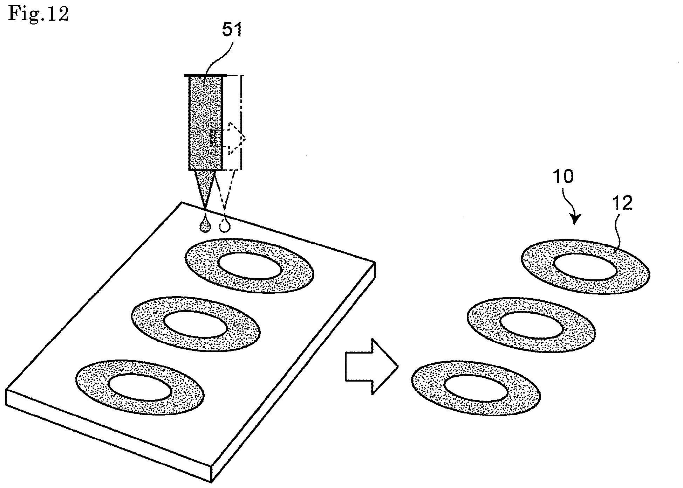

In the supplying step in the second embodiment described above, the embodiment in which the film raw material is supplied by the coater apparatus such as a die coater or a slit coater has been described, but instead of this configuration, the film raw material may be supplied using a dispenser 51 (see Fig. 12). According to such a configuration, the dispenser 51 can accurately supply the film raw material. When the film raw material is supplied using the dispenser 51, the cutting step for obtaining the heating film 10 may be omitted.

### -Modification 3-

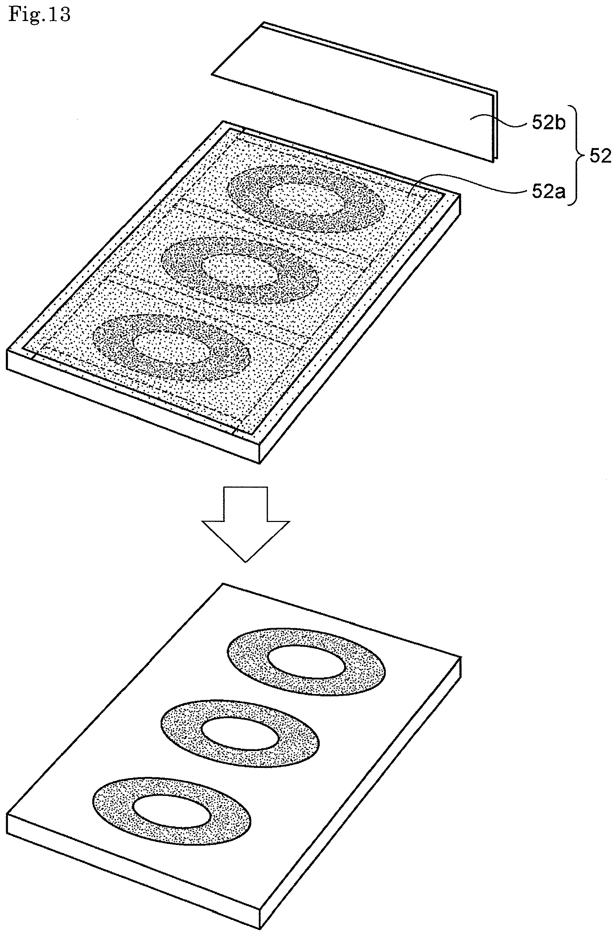

In the supplying step in the second embodiment described above, the embodiment in which the film raw material is supplied by a coater apparatus such as a dispenser, a die coater, or a slit coater has been described. However, instead of this configuration, a screen printing apparatus 52 supplying the film raw material by moving a squeegee 52b from above a screen mask 52a may be used (see Fig. 13). According to such a configuration, a desired heating film can be mass-produced by a screen printing method.

### [Heating Film of The Present Disclosure]

### -Configuration of Heating Film (First Embodiment of Heating Film)-

Next, a heating film manufactured by the above-described manufacturing method for a heating film of the present disclosure will be described. A heating film for heating a lens of the present disclosure contains a carbon filler, a resin, and other inclusions, and the sum of contents of the carbon filler and the resin is 90% or more. The phrase "inclusions other than the carbon filler and the resin" as used in the present specification indicates an inclusion that is preferably present as the constituent component of the heating film and an inclusion that is undesired as the constituent component of the heating film. The phrase "inclusion preferably present as the constituent component of the heating film" refers to an inclusion other than the carbon filler and the resin, which is caused by improving the properties of the heating film. Specifically, the phrase "inclusion preferably present as the constituent component of the heating film" refers to, for example, magnesium oxide particles, aluminum oxide, and silicon oxide particles. Meanwhile, the phrase "undesired inclusion" refers to, in a broad sense, a substance that is not substantially essential as the constituent component of the heating film, and in a narrow sense, a substance other than the carbon filler, the resin, and the inclusion that is preferably present as the constituent component of the heating film. Specifically, the term "undesired inclusion" refers to a composition other than a carbon fiber, a binder resin, magnesium oxide particles, aluminum oxide, and silicon oxide particles. Furthermore, the undesirable inclusion may contain, for example, moisture, pores, and air in addition to barium sulfide particles.

The heating film may include a heating part generating heat over the entire closed region. In other words, the entire closed region may be the heating part. The term "closed region" as used in the present specification refers to, for example, a region surrounded by a straight line or a curve and closed. The term "entire region" is not limited to 100% of the closed region, and may be preferably 90% or more, more preferably 95% or more, and still more preferably 99% or more of the region.

The film thickness of the heating film is preferably 5 pm or more and 400 pm or less. By setting the film thickness in this range, the resistance value of the heating film can be desiredly designed.

Here, the resistance value of the heating film will be described. The heating film of the present disclosure is mainly considered to be used for melting a frozen product attached to a lens by applying electric power to the heating film. At this time, the electric power applied to the heating film needs to be electric power that does not impair a lens function even when the lens is heated by the applied electric power. Furthermore, it is desired to dissolve a predetermined amount of a frozen product in a short time by the heating film. The resistance value of the heating film is designed in consideration of these, and the resistance value of the heating film of the present disclosure is set to about 20 to 60 Ω.

The carbon filler may contain a carbon fiber, and can reduce resistance value variation during operation as compared with conventionally known carbon particles alone.

The resin preferably contains a fluororesin. The resin contains the fluororesin, whereby the heating film having a good heat resistance or durability can be obtained.

It is preferable that the heating film has an outer circular contour in plan view, and has a pore at a center. With such a shape, it is possible to obtain the heating film that matches the lens shape.

An electrode is preferably provided on the back surface of the heating film. This makes it possible to facilitate wiring arrangement.

### -Configuration of Heating Film (Second Embodiment of Heating Film)-

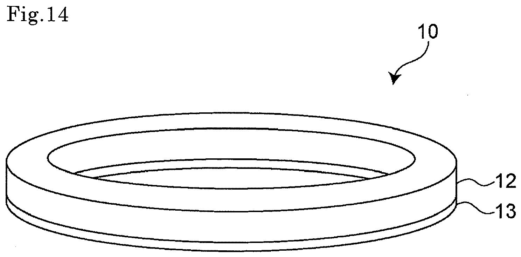

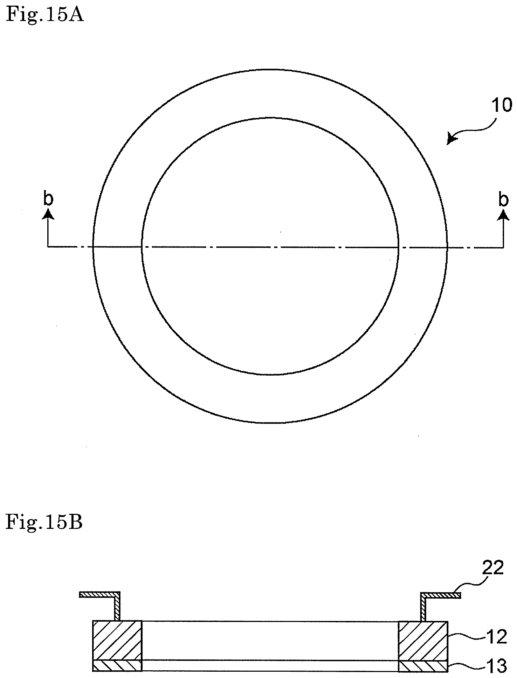

Next, as a second embodiment of the heating film, a heating film 10 including a substrate 13 holding a heating part 12 will be described with reference to Figs. 14 and 15.

The heating part 12 has a film shape, and preferably has a film thickness of 5 pm or more and 400 pm or less as described above, but the substrate 13 for holding the heating part 12 may be provided to reinforce the heating part 12. The phrase "holding the heating part" as used in the present specification refers to a state where the heating part is kept by contact with the heating part, and includes not only a state where the substrate 13 is disposed below the heating part 12 to keep the heating part 12, but also a state where the substrate 13 is disposed above or beside the heating part 12 to keep the heating part 12. In other words, a state where the heating part 12 and the substrate 13 are laminated so as to be in contact with each other is included. By providing the substrate 13, the rigidity of the heating film 10 can be enhanced. When the substrate 13 is provided on the heating film, the thermal shrinkage of the film due to high temperature of the heating part 12 can also be suppressed. The thickness of the substrate 13 is preferably 5 pm or more and 100 pm or less.

The substrate 13 may have an outer circular contour in plan view, and has a pore at a center to correspond to the heating part 12. The shape of the substrate 13 is not limited to this aspect, and the contour or the shape of the pore may be elliptical or rectangular, or the contour and the shape of the pore may be different from each other (for example, the contour may be rectangular, and the shape of the pore may be elliptical).

The substrate 13 preferably has a heat resistance and an insulating property. Therefore, as the material used for the substrate 13, for example, a heat-resistant insulating sheet made of polyimide, LCP, or polycarbonate or the like may be used. Here, the phrase "heat resistance of the substrate" refers to having a resistance to at least heat generated by the heating part, and the phrase "insulating property of the substrate" refers to an insulating property in such an extent that the substrate can be electrically insulated from at least the conductive heating part.

For example, when a lens is to be heated, the heating film 10 of the present embodiment may heat the lens in a state where the substrate 13 side is brought into contact with the lens (see Figs. 15A and 15B). In this case, the lens can be easily heated by providing a wiring 22 on the heating part 12 side. An effect of keeping the heat of the heated lens warm by the substrate 13 (heat insulating effect) is also provided. Instead of the above-described form, the heating part 12 side may be brought into contact with the lens. This case can be achieved by providing a wiring for supplying electric power to the heating part 12 inside the lens. Since the heating part 12 is directly brought into contact with the lens, the lens can be efficiently heated.

### -Configuration of Heating Film (Third Embodiment of Heating Film)-

As a third embodiment of the heating film, a heating film in which at least two through pores are provided in a substrate 13 will be described with reference to the drawings.

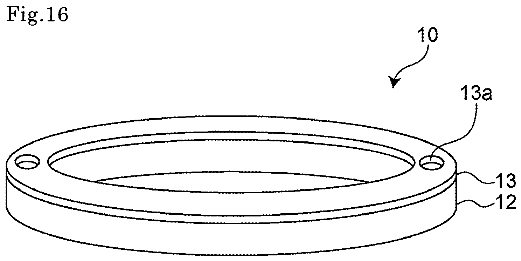

The substrate 13 may have at least two through pores 13a for supplying electric power to a heating part 12. By providing the through pore 13a in the substrate 13, the heating part 12 is exposed in plan view from the substrate 13 side (see Fig. 16). The electric power can be supplied to the heating part 12 through a portion where the heating part 12 is exposed.

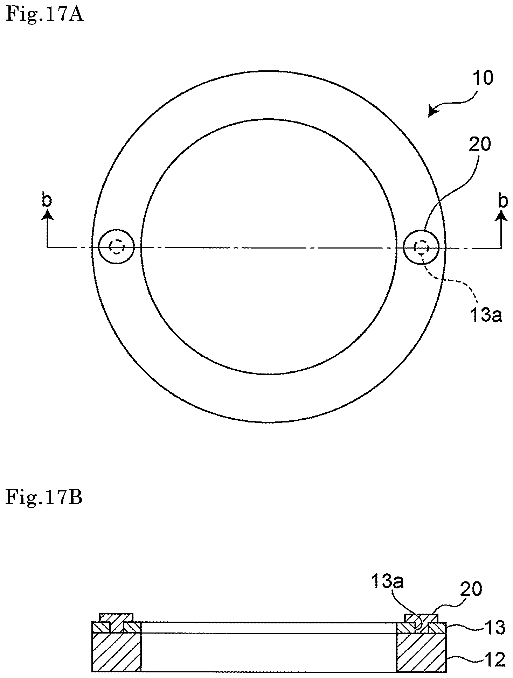

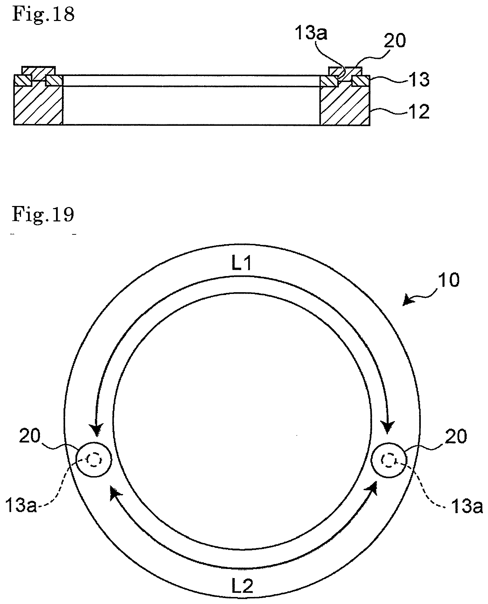

When the electric power is supplied to the heating part 12 through the through pore 13a, the electrode 20 may be embedded in the through pore 13a (see Figs. 17A and 17B). Electrical connection using a conductive wire or the like may be performed without embedding the electrode 20. From the viewpoint of manufacturing to be described later, a part of the heating part 12 may be disposed in the through pore 13a (see Fig. 18).

Furthermore, the through pores 13a may be disposed at symmetrical positions about the substrate 13. The term "symmetrical positions" as used in the present specification refers to positions where the through pores 13a overlap each other when the substrate 13 is rotated by 180° with the center of the substrate as a rotation axis. As described above, when the two through pores 13a are disposed at the symmetrical positions about the substrate 13, the distances between the through pores 13a become substantially equal to each other, so that the heating part 12 can uniformly generate heat.

Regarding the disposal of the through pores 13a, the through pores may be disposed at asymmetric positions about the substrate 13 (see Fig. 19). The term "asymmetric positions" as used in the present specification refers to positions at which the through pores 13a do not overlap each other even when the substrate 13 is rotated by 180° with the center of the substrate as the rotation axis. As described above, when the two through pores 13a are disposed at asymmetric positions with the substrate 13 as the center, a difference occurs in the distance between the through pores 13a. For example, according to Fig. 19, when the distance between the through pores along the upper heating part 12 is L1 and the distance between the through pores along the lower heating part 12 is L2 in the distance between the through pores along the heating part 12, the distance L1 between the through pores is longer than the distance L2 between the through pores. That is, a current is less likely to flow on the side of the distance L1 between the through pores of the heating part 12, and a current is likely to flow on the side of the distance L2 between the through pores. Then, the heat is less likely to be generated on the side of the distance L1 between the through pores of the heating part 12, and the heat is likely to be generated on the side of the distance L2 between the through pores, so that deviation of heat generation can be caused. According to such a configuration, for example, when the tendency of the existence of a frozen product such as a case where a large number of frozen products are present on the side of the distance L2 between the through pores is known, deviation of heat generation is caused, which makes it possible to effectively generate heat.

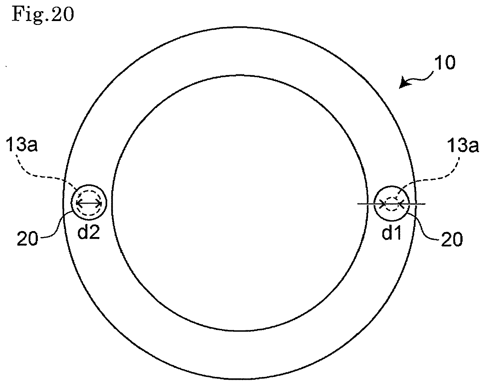

As the form of the through pore, the diameter of the through pore may be changed. For example, as shown in Fig. 20, a right through pore diameter d1 and a left through pore diameter d2 (> d1) may be set. Even in such a form, the heating film can be caused to effectively generate heat.

### -Configuration of Heating Film (Fourth Embodiment of Heating Film)-

As still another embodiment of the heating film, a heating film further including a covering part 14 covering a heating part will be described with reference to the drawings.

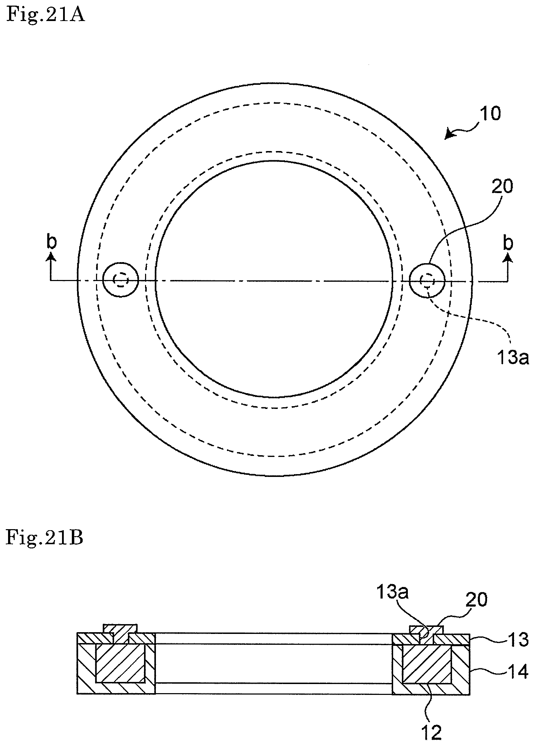

As shown in Figs. 21A and 21B, a heating film 10 may further include the covering part 14 covering a heating part 12. The heating part 12 is covered with the covering part 14, which makes it possible to reduce the exposure of the heating part 12 to the outside.

The covering part 14 preferably has a heat resistance and an insulating property. Therefore, as the material used for the covering part 14, for example, a heat-resistant insulating resin such as polyimide, LCP, or polycarbonate may be used. A photosensitive resin may be used to perform patterning for covering the heating part 12. Here, the phrase "heat resistance of the covering part" refers to having a resistance to at least heat generated by the heating part, and the phrase "insulating property of the covering part" refers to an insulating property in such an extent that the covering part can be electrically insulated from at least the conductive heating part.

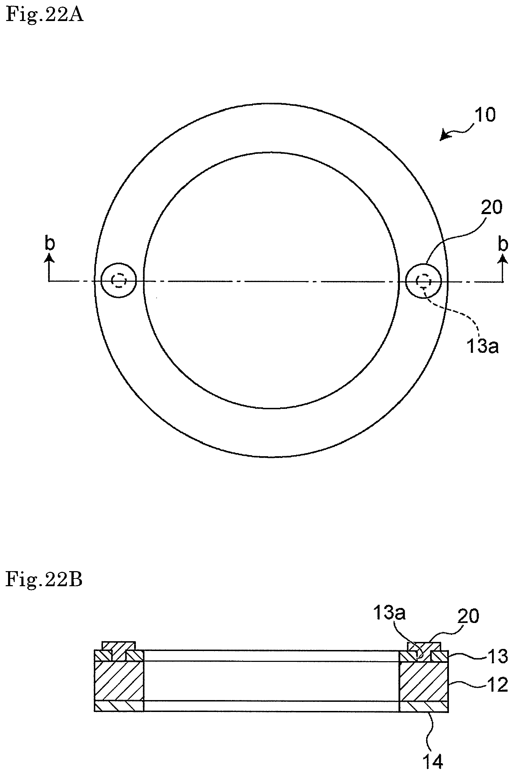

In the heating film 10 of the present embodiment, the heating part 12 is covered with the covering part 14, whereby the heating film 10 can be less susceptible to an external environment (for example, a temperature or a humidity). Here, the phrase "covering the heating part" as used in the present specification is not limited to covering the entire outer surface of the heating part 12, and includes covering a part of the heating part 12. That is, as shown in Figs. 22A and 22B, a configuration in which a part of the heating part 12 is covered with the covering part 14 may be included.

### -Manufacturing Method for Heating Film of Second Embodiment and Third Embodiment-

Next, a manufacturing method for a heating film according to the second embodiment and the third embodiment will be described. First, a manufacturing method for a heating film 10 further including a substrate 13 will be described with reference to the drawings. As the manufacturing method for a heating film, <Support Member Preparing Step>, <Supplying Step>, <Baking Step>, <Peeling Step>, and <Cutting Step> have been described in detail in -Second Embodiment- in [Manufacturing Method for Heating Film of The Present Disclosure], but description redundant with the above description will be appropriately omitted.

### <Support Member Preparing Step>

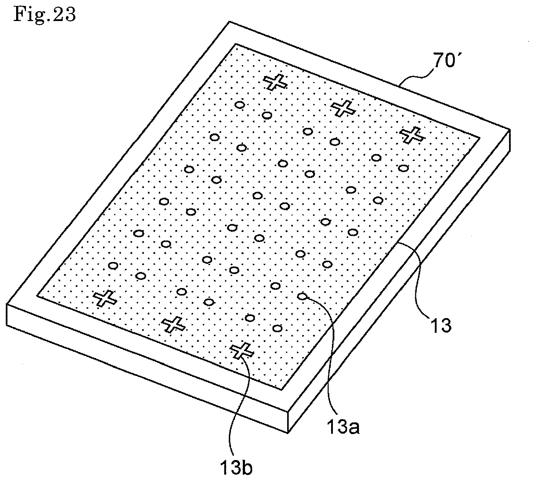

Unlike the above-described support member 70 (see Fig. 7), a support member 70' may be a plate-like member having good peelability from a substrate 13. First, the substrate 13 may be placed on the support member 70' (see Fig. 23). The substrate 13 may have a heat resistance and an insulating property, and for example, a heat resistant insulating sheet made of polyimide, LCP, or polycarbonate or the like may be used. In the substrate 13, an alignment marker 13b, and a through pore 13a for supplying electric power to a heating film may be provided. The positions of the through pores 13a may be the above-described symmetrical positions or asymmetric positions. The through pores 13a may have the same size or different sizes.

### <Supplying Step>

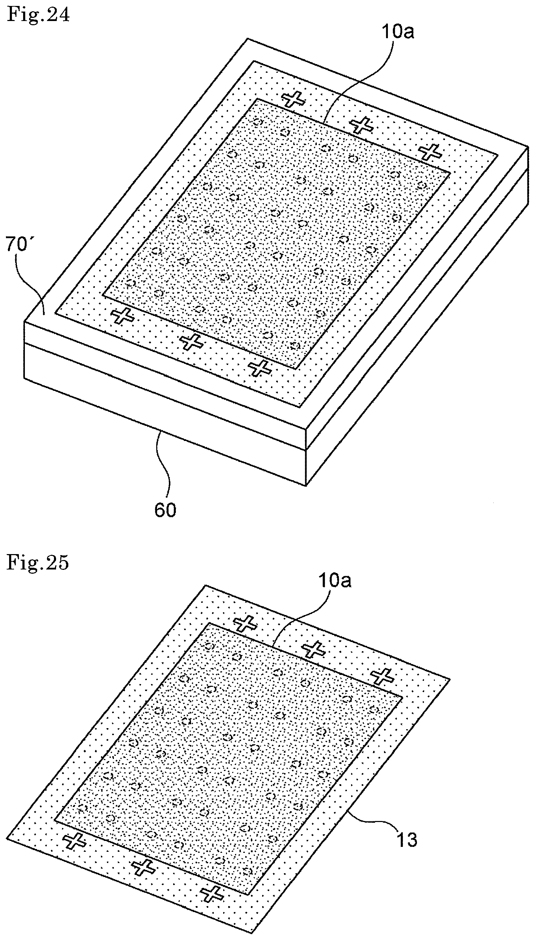

After the above-described support member preparing step, a film raw material may be supplied onto the substrate 13 (see Fig. 24). At that time, a heating element 60 for bringing the support member 70' into a heated state or a room temperature state may be used. According to the supplying step, as described with reference to Fig. 18, a part of the heating part 12 is disposed in the through pore 13a. The amount of the film raw material supplied may be controlled so that the heating part 12 is not disposed in the through pore 13a.

### <Baking Step>

After the film raw material is supplied to the substrate 13, the baking step may be performed. The baking step may be performed by baking at a temperature of 180°C to 220°C for 60 minutes or more. The baking step may cause a reaction in which the film raw material is cured to manufacture a heating film precursor 10a. Before the baking step, a temporary baking step of temporarily curing the film raw material may be performed.

### <Peeling Step> and <Cutting Step>

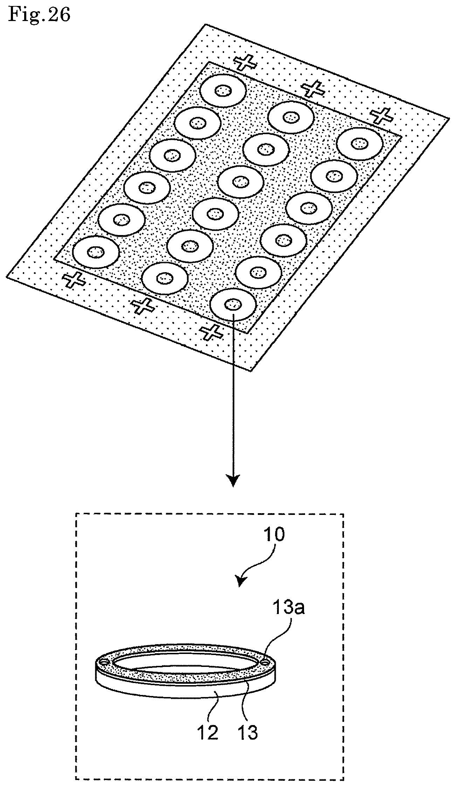

After the baking step is completed, the support member 70' is peeled off from the substrate 13 (see Fig. 25), and after the peeling step is completed, a cutting step of cutting the heating film precursor 10a in accordance with the lens shape may be performed (see Fig. 26). An electrode 20 may be embedded in the through pore 13a.

According to the above manufacturing step, the heating film of the third embodiment shown in Fig. 16 can be manufactured. In the <Support Member Preparing Step> of the present manufacturing step, the heating film of the second embodiment can be manufactured by using the substrate 13 in which the through pore 13a is not formed.

### -Manufacturing Method for Heating Film of Fourth Embodiment-

Next, a manufacturing method for a heating film according to the fourth embodiment will be described. Description redundant with the above description will be appropriately omitted.

### <Supplying Step>

In the case of manufacturing a heating film including a covering part 14 completely covering a heating part 12 as shown in Fig. 21, it is preferable to supply a patterned film raw material onto a substrate 13 after the above-described support member preparing step. Examples of a method for patterning the film raw material include a method in which printing provided by a screen printing apparatus or pad printing is used, and a method in which drawing provided by a dispenser apparatus, an inkjet apparatus, or a spray coating apparatus or the like is used. When the heating film including the covering part 14 covering a part of the heating part 12 as shown in Fig. 22 is manufactured, the film raw material may not be patterned. In the supplying step, a heating element 60 for bringing a support member 70' into a heated state or a room temperature state may be used.

### <Baking Step>

After the film raw material is supplied to the substrate 13, the baking step may be performed. The baking step may be performed by baking at a temperature of 180°C to 220°C for 60 minutes or more. The baking step may cause a reaction in which the film raw material is cured to manufacture a heating film precursor 10a. Before the baking step, a temporary baking step of temporarily curing the film raw material may be performed.

### <Covering Part Forming Step>

After the baking step, a covering material 14' for forming the covering part 14 may be supplied. The covering part 14 preferably has a heat resistance and an insulating property. Therefore, as the covering material 14' used for the covering part 14, for example, a heat-resistant insulating resin such as polyimide, LCP, or polycarbonate may be used. After the covering material 14' is supplied, temporal curing may be performed at 100°C or higher and 150°C or lower for 1 hour or less, and main curing may be performed at 200°C or lower and 250°C or lower for 2 hours or less.

### <Peeling Step> and <Cutting Step>

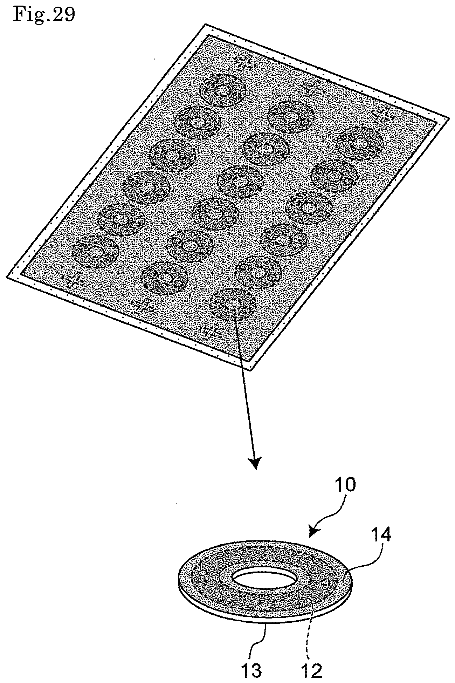

After the covering part forming step is completed, the support member 70' is peeled off from the substrate 13 (see Fig. 29), and after the peeling step is completed, a cutting step of cutting the heating film precursor 10a in accordance with the lens shape may be performed. An electrode 20 may be embedded in the through pore 13a.

According to the above manufacturing step, the heating film of the fourth embodiment shown in Fig. 21 or 22 can be manufactured.

### EXAMPLES

Next, Examples related to the present invention will be described. Heating films of Examples and Comparative Examples shown below were manufactured, and subjected to a demonstration test.
Example: Heating film manufactured by manufacturing step schematically shown in Fig. 3
Comparative Example: Heating film manufactured by manufacturing step schematically shown in Fig. 2B

Film raw materials used in the manufacture of Example and Comparative Example were as follows, and the preparation ratio was set to (main agent) : (dilution solvent) : (curing agent) = 0.9 : 0.1 : 0.015.

### (Main Agent)

Carbon filler: Carbon black
Binder resin: Fluororubber compound and crystalline silica
Solvent: n-butyl acetate and methyl isobutyl ketone
(Curing agent)
Methanol, diethylenetriamine, and silane compound
(Dilution solvent)
Methyl isobutyl ketone

For the contents of the demonstration test, the heating films of Example and Comparative Example were subjected to observation of SEM images, elemental analysis, and aging measurement of the resistance values of the heating films under a high-temperature and high-humidity environment.

### -Observation of SEM Images-

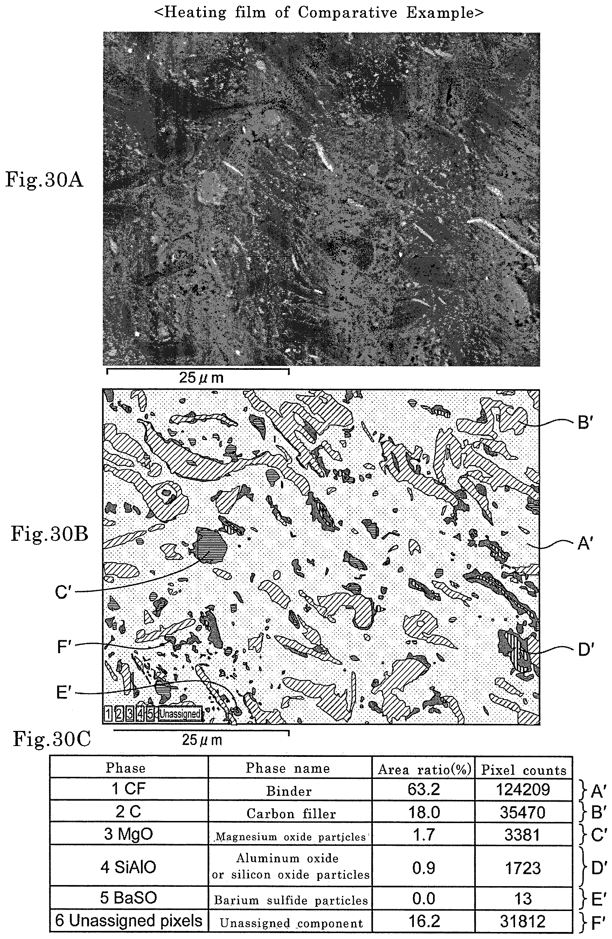

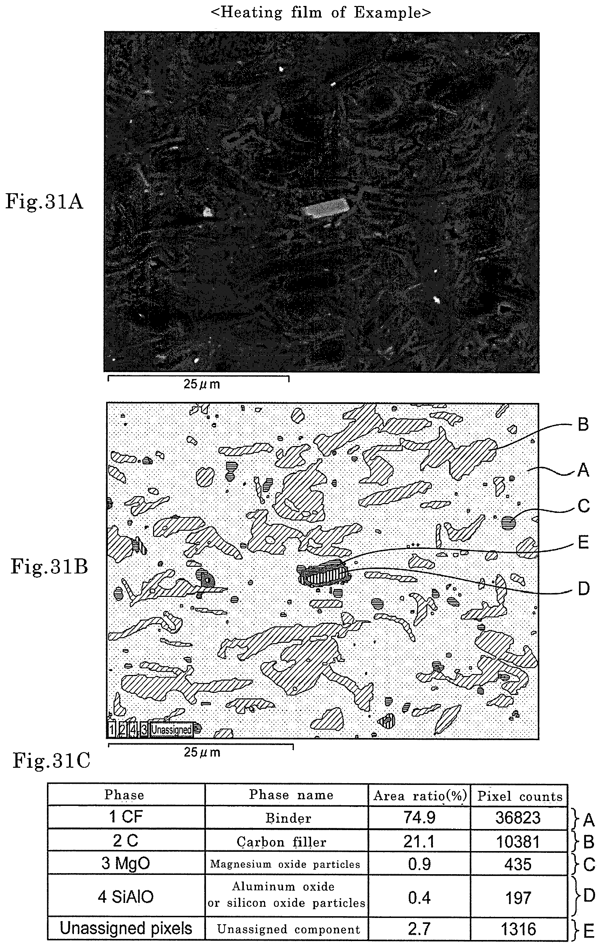

Fig. 30A is an SEM image of the heating film of Comparative Example, and Fig. 31A is an SEM image of the heating film of Example. The SEM image is an image obtained by observing the surface of the heating film with a scanning electron microscope (JSM-7900F) manufactured by JEOL Ltd. at an acceleration voltage of 5 kV and 10,000 times.

In the SEM image of the heating film of Comparative Example of Fig. 30A, a number of small through holes were observed in the surface, whereas in the SEM image of the heating film of Example of Fig. 31A, a dense surface was observed as a whole.

### -Elemental Analysis-

Fig. 30B is an elemental analysis mapping image of Comparative Example, and Fig. 31B is an elemental analysis mapping image of Example. The elemental analysis mapping image is an image obtained by Ultim Extreme manufactured by Oxford instruments at an acceleration voltage of 10 kV and 2000 times.

In the elemental analysis mapping image for the heating film of Comparative Example of Fig. 30B, a portion A' corresponds to the binder resin, a portion B' corresponds to the carbon filler, a portion C' corresponds to magnesium oxide particles, a portion D' corresponds to aluminum oxide or silicon oxide particles, a portion E' corresponds to barium sulfide particles, and a portion F' corresponds to an unassigned component. The elemental analysis table of Fig. 30C corresponds to Fig. 30B. The area ratio of the portion A' (that is, the area ratio of the binder resin) was 63.2%, the area ratio of the portion B' (that is, the area ratio of the carbon filler) was 18.0%, and the sum of the portion A' and the portion B' was 81.2%.

Meanwhile, in the elemental analysis mapping image for the heating film of Example of Fig. 31B, a portion A corresponds to the binder resin, a portion B corresponds to the carbon filler, a portion C corresponds to magnesium oxide particles, a portion D corresponds to aluminum oxide or silicon oxide particles, and a portion E corresponds to an unassigned component. The elemental analysis table of Fig. 31C corresponds to Fig. 31B. The area ratio of the portion A (that is, the area ratio of the binder resin) was 74.9%, the area ratio of the portion B (that is, the area ratio of the carbon filler) was 21.1%, and the sum of the portion A and the portion B was 96.0%.

From the results of the elemental analysis mapping described above, in the heating film manufactured by the manufacturing step of the present disclosure, the sum of the carbon filler and the resin conclusion is 90% or more based on the entire of the heating film. The content of the carbon filler is preferably 15% or more and 25% or less from the viewpoint of conductivity. In the present specification, the standard of the content indicates a ratio based on the entire of the heating film.

### -Measurement of Aging of Resistance Value of Heating Film under High Temperature-High Humidity Environment-

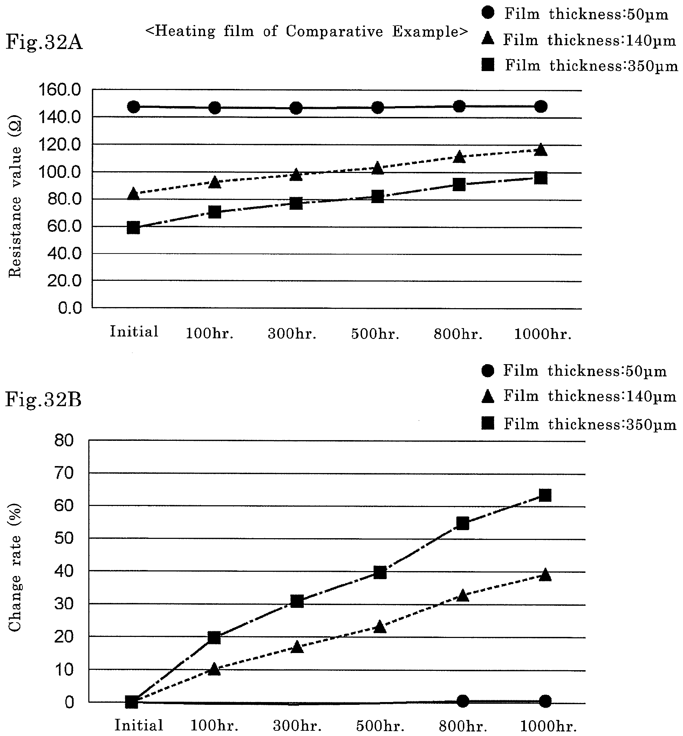

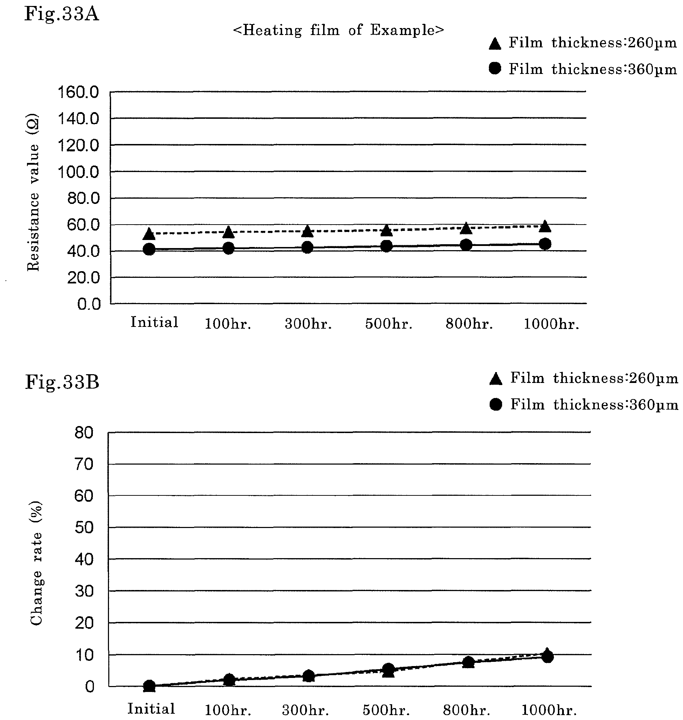

Figs. 32A and 33A show graphs showing the aging measurement of the resistance value under a high temperature (85°C)-high humidity (85%) environment for the heating films of Example and Comparative Example. In Figs. 32A and 33A, a vertical axis represents a resistance value (Ω), and a horizontal axis represents an elapsed time. Figs. 32B and 33B show graphs showing the change rate of the resistance value corresponding to the graphs of Figs. 32A and 33A. In Figs. 32B and 33B, a vertical axis represents the change rate (%) of the resistance value, and a horizontal axis represents an elapsed time.

As Comparative Example, three heating films having different film thicknesses were prepared, and subjected to the aging measurement of the resistance value. In the graphs of Figs. 32A and 32B for the heating film of Comparative Example, a graph indicated by a circular point (●) corresponds to a graph for a heating film having a film thickness of 50 pm, a graph indicated by a triangle point (▲) corresponds to a graph for a heating film having a film thickness of 140 pm, and a graph indicated by a square point (■) corresponds to a graph for a heating film having a film thickness of 350 pm.

According to the graph indicated by the circular point (film thickness: 50 pm) in Fig. 32A, the resistance value was about 150 Ω in the initial state, and the change in the resistance value was small even after 1000 hours. However, according to the graph indicated by the triangle point (film thickness: 140 pm), it was confirmed that the resistance value is about 84 Ω in the initial state, but increased to about 117 Ω with the lapse of 1000 hours, and the resistance value is increased by 40% with the lapse of 1000 hours according to Fig. 32B. However, according to the graph indicated by the square point (film thickness: 350 pm), it was confirmed that the resistance value is about 59 Ω in the initial state, but increased to about 96 Ω with the lapse of 1000 hours, and the resistance value is increased by 64% with the lapse of 1000 hours according to Fig. 32B. In each of the heating films of Comparative Example, the resistance value was larger than the design value (20 to 60 Ω).

Meanwhile, as Example, two heating films having different film thicknesses were prepared, and subjected to the aging measurement of the resistance value. In the graphs of Figs. 33A and 33B for the heating film of Example, a graph indicated by a triangle point (▲) corresponds to a graph for a heating film having a film thickness of 260 pm, and a graph indicated by a circular point (●) corresponds to a graph for a heating film having a film thickness of 360 pm.

According to the graph indicated by the triangle point (film thickness: 260 pm) in Fig. 33A, it was confirmed that the resistance value is about 53 Ω in the initial state, and about 59 Ω even after the lapse of 1000 hours to cause a small change in the resistance value. According to the graph indicated by the circular point (film thickness: 360 pm), it was confirmed that the resistance value is about 41.3 Ω in the initial state, and about 45 Ω even after the lapse of 1000 hours to cause a small change in the resistance value. According to the graph indicated by the triangle point and the circular point in Fig. 33B, it was confirmed that the change rate in the resistance value is about 10%. That is, the resistance value of the heating film could be set within the range of the design value (20 to 60 Ω), and the change in the resistance value could be reduced even under a high-temperature-high-humidity environment.

As described above, it was confirmed that the heating film manufactured by the manufacturing method of the present disclosure is excellent in environmental resistance.

Note that the embodiments disclosed herein are illustrative in all respects, and do not provide a basis for restrictive interpretation. Therefore, the technical scope of the present invention is not to be construed only by the above-described embodiments, but is defined based on the description of the claims. The technical scope of the present invention includes meanings equivalent to the claims and all modifications within the scope.

### INDUSTRIAL APPLICABILITY

The present disclosure can be applied to the field of a heating film that can be manufactured via a simple manufacturing step, and is excellent in environmental resistance. The heating film of the present disclosure can be used for a camera for a monitoring system for disaster prevention and crime prevention and the like, or a camera for an exterior application such as an in-vehicle camera, or the like, although these are merely examples.

### DESCRIPTION OF REFERENCE SIGNS

10', 10: Heating film
11', 11: Film raw material
10a', 10a: Heating film precursor
12: Heating part
13: Substrate
13a: Through pore
13b: Alignment marker
14: Covering part
14': Coating material
20: Electrode
21: Electrode frame
22: Wiring
50: Supply apparatus
51: Dispenser
52: Screen printing apparatus
52a: Screen mask
52b: Squeegee
60: Heating element
70, 70': Support member
71: Frame
72: Resin member
100, 100': Lens substrate
110^{:} Lens
111: Flat portion

## Claims

1. A manufacturing method for a heating film for heating a lens comprising
a supplying step of supplying a film raw material containing a carbon filler, a binder resin, and a solvent in a heated state or a room temperature state according to a supply thickness of the film raw material.

2. The manufacturing method according to claim 1, wherein when the supply thickness is less than 120 pm, the supplying step is performed in the room temperature state, and when the supply thickness is 120 pm or more, the supplying step is performed in the heated state.

3. The manufacturing method according to claim 1 or 2, wherein a heating temperature in the heated state is 30°C or higher and 80°C or lower.

4. The manufacturing method according to any one of claims 1 to 3, wherein the solvent is a low-boiling solvent having a boiling point of 150°C or lower.

5. The manufacturing method according to any one of claims 1 to 4, wherein the solvent is a non-polar solvent.

6. The manufacturing method according to any one of claims 1 to 5, wherein the film raw material has a viscosity of 10,000 cps or more and 50,000 cps or less.

7. The manufacturing method according to any one of claims 1 to 6, wherein in the supplying step, the film raw material is supplied to a support member on which the film raw material is supported.

8. The manufacturing method according to claim 7, wherein the support member is the lens.

9. The manufacturing method according to claim 7 or 8, wherein the support member is brought into the heated state by a heating element.

10. The manufacturing method according to any one of claims 1 to 9, further comprising a baking step of baking the film raw material after the supplying step.

11. The manufacturing method according to claim 10, further comprising a cutting step of cutting a heating film precursor obtained in the baking step in accordance with a shape of the lens.

12. A heating film for heating a lens comprising
a carbon filler and a resin, wherein a sum of contents of the carbon filler and the resin is 90% or more based on an entire of the heating film.

13. The heating film according to claim 12, wherein an entire closed region is a heating part.

14. The heating film according to claim 13, further comprising a substrate holding the heating part.

15. The heating film according to claim 14, wherein the substrate has a heat resistance and an insulating property.

16. The heating film according to claim 14 or 15, wherein the substrate has at least two through pores.

17. The heating film according to claim 16, wherein the at least two through pores are disposed at symmetrical positions about the substrate.

18. The heating film according to claim 16, wherein the at least two through pores are disposed at asymmetric positions about the substrate.

19. The heating film according to any one of claims 16 to 18, wherein the at least two through pores are different in size from each other.

20. The heating film according to any one of claims 16 to 19, wherein a part of the heating part is disposed in the at least two through pores.

21. The heating film according to any one of claims 16 to 20, wherein an electrode is provided in each of the at least two through pores.

22. The heating film according to any one of claims 13 to 21, further comprising a covering part covering the heating part.

23. The heating film according to any one of claims 12 to 22, wherein a content of the carbon filler is 15% or more and 25% or less based on the entire of the heating film.

24. The heating film according to any one of claims 12 to 23, wherein the carbon filler is a carbon fiber.

25. The heating film according to any one of claims 12 to 24, wherein the resin contains a fluororesin.

26. The heating film according to any one of claims 12 to 25, wherein the heating film has a film thickness of 5 pm or more and 400 pm or less.

27. The heating film according to any one of claims 12 to 26, wherein the heating film has an outer circular contour in plan view, and has a pore at a center.

28. The heating film according to any one of claims 12 to 27, further comprising an electrode on a back surface of the heating film.

29. The heating film according to any one of claims 28, wherein the electrode has a thickness of 5 pm or more and 50 pm or less.

30. A lens comprising the heating film according to any one of claims 12 to 29, wherein the heating film is in direct contact with the lens.

31. An in-vehicle camera comprising the lens according to claim 30.
